# EUROPEAN PATENT APPLICATION

(11) **EP 4 440 235 A1**
(43) Date of publication of application: **02.10.2024**
(21) Application number: 23166169.5
(22) Date of filing: 31.03.2023
(51) Int. Cl.: H04W 76/25, H04L 67/14, H04L 67/145, H04L 69/28, H04W 76/38

(54) **TECHNIQUE FOR CONTROLLING WIRELESS CONNECTIVITY**

(71) Applicant: abl solutions GmbH, 90411 Nürnberg (DE)
(72) Inventor: SICHERT, Stefan, 92342 Freystadt (DE)
(74) Representative: Laqua, Bernd Christian Kurt

(57) **Abstract**

A technique for controlling wireless connectivity between a mobile device and an Access Point, AP, of a Wireless Area Local Network, WLAN, is disclosed. A method implementation of the technique comprises establishing a wireless connection between the mobile device and the AP, triggering a request for a user interaction to be performed by a user of the mobile device, a user interaction being an interaction between a user of the mobile device and the mobile device, determining whether the requested user interaction is performed by the user of the mobile device, and, when it is determined that the requested user interaction is performed by the user of the mobile device, maintaining the wireless connection between the mobile device and the AP.

## Description

The present disclosure generally relates to the field of Wireless Area Local Network (WLAN) access. More particularly, the present disclosure relates to a technique for establishing a wireless connection between a mobile device and a WLAN Access Point (AP) and maintaining this connection based on periodic or event-based user interactions. The technique may be embodied in methods, computer programs, apparatuses and systems.

Over the recent decade, the adoption of wireless mobile devices has steadily increased and has today reached a considerable penetration across the worldwide population. For many people, wireless mobile devices, such as smartphones, tablets or mobile music players, have become an integral part of their everyday life and particularly smartphones have established as daily companions that are carried by users at almost any time, no matter where they go. Wireless mobile devices typically support wireless technologies, such as Wi-Fi and/or Bluetooth.

Furthermore, public-access WLANs for providing reliable Internet or local network access have become common at public places during the recent years. For instance, public-access WLAN for providing internet access has become a standard service at railway stations, airports, restaurants, hotels, etc. To this end, APs for providing public-access WLAN have been installed at the respective locations.

One conventional way to establish a wireless connection between a mobile device and an AP is based on using pre-shared Wi-Fi Protected Access, WPA, profiles, which have to be manually installed by users on their mobile devices for establishing a wireless connection between the mobile devices and APs. However, in case of pre-shared WPA profiles, the users need to trust the public WLAN operator to install a profile on the mobile devices, which represents a security threat to the users, especially in case of public-access WLANs.

Another conventional way for establishing a wireless connection between a mobile device and a WLAN AP, especially for public-access WLANs, is based on so called captive portals. A captive portal is a web page which the user of a public-access WLAN is obliged to view and interact with before network access for the mobile device is granted. When interacting with the captive portal the user may, for instance, be obliged to participate in a survey for receiving WLAN access. However, once access has been granted and when the granted WLAN access is disabled afterwards, the user has to reconnect through the captive portal again in order to reconnect to the WLAN.

From the user's perspective, this procedure is both time-inefficient and inconvenient. Moreover, frequently establishing and terminating a wireless connection between a mobile device and an AP of a WLAN bears the disadvantages of interrupting ongoing data transmissions and impairing network-based functionalities of the mobile devices.

Therefore, an enhanced technique for controlling a wireless connectivity for overcoming the above-discussed problems is needed.

The independent claims define methods and devices which are based on such a technique. Further embodiments are defined by the dependent claims.

According to a first aspect, method for controlling wireless connectivity between a mobile device and an AP of a WLAN is provided. The method comprises:
- establishing a wireless connection between the mobile device and the AP;
- triggering a request for a user interaction to be performed by a user of the mobile device, the user interaction being an interaction between a user of the mobile device and the mobile device;
- determining whether the requested user interaction is performed by the user of the mobile device; and
- when it is determined that the requested user interaction is performed by the user of the mobile device, maintaining the wireless connection between the mobile device and the AP.

The mobile device can be a smartphone, a tablet, a mobile music player, an electronic book reader or any other device which is configured to be connected to a WLAN. An AP can be any device which is configured to establish a wireless connection to the mobile device and connect this mobile device, via the wireless connection, to a wired network. As a standalone device, the AP may have a wired connection to a router, but, in a wireless router, the AP can also be an integral component of the router itself.

"Controlling wireless connectivity between a mobile device and an AP" may involve performing operations affecting a wireless connection between the mobile device and the AP. In particular, a method for "controlling wireless connectivity between a mobile device and an AP" may include operations for at least one of establishing, maintaining, terminating and reestablishing a wireless connection between the mobile device and the AP.

Establishing a wireless connection between the mobile device and the AP can be initiated by the mobile device and include all necessary operations for establishing a wireless data communications link between the mobile device and the AP, the wireless data communications link allowing an exchange of data between the mobile device and the AP. In particular, establishing a wireless connection between the mobile device and the AP can include all necessary operations for establishing a wireless data communications link between the mobile device and the AP according to a Wi-Fi standard. It will be understood that the necessary operations for establishing the wireless data communications link between the mobile device and the AP can partially be performed by the AP.

As is further discussed in more detail below, the controlling method disclosed herein may minimize the number of necessary WLAN disconnection and connection procedures for requesting additional user interactions to be performed.

Triggering the request for a user interaction can include issuing a request for a user interaction to be performed by the user of the mobile device. The request for a user interaction to be performed by the user of the mobile device can be issued by means of at least one of the mobile device, the AP and a backend server. Alternatively or additionally, triggering the request for a user interaction can include issuing a control or configuration message by means of at least one of the mobile device, the AP and a backend server. The control or configuration message can contain instructions based on which a request for a user interaction can be issued. The instructions can be executable by a processor of at least one of the mobile device, the AP and the backend server. The backend server may be a cloud-based server and may reside in a cloud computing environment, for example. The AP may exchange data with the backend server via a wired or wireless connection, for instance via the Internet. It will be understood, however, that the backend server and the AP may also be installed in an intranet-based location, for example. When a wireless connection between the mobile device and the AP has been established, the mobile device may exchange data with the backend server via the AP.

The user interaction, which is to be performed by the user of the mobile device, is requested in order to decide on whether the wireless connection is to be maintained (i.e., without terminating or temporarily disconnecting the wireless connection). In other words, the request for a user interaction to be performed by a user of the mobile device may be triggered for the purpose of providing a basis for determining or deciding whether to maintain the wireless connection between the mobile device and the AP.

Determining whether the requested user interaction is performed by the user of the mobile device can be performed by means of at least one of the mobile device, the AP and the backend server. Moreover, determining whether the requested user interaction is performed by the user of the mobile device can include determining whether a user input into the mobile has been received and/or whether multimedia content has been displayed or outputted by the mobile device in response to the request for user interaction. In other words, determining whether the requested user interaction is performed by the user of the mobile device or not can include detecting an input into and/or an output of the mobile device that is expected in response to the request, which has been triggered in order to provide a basis for determining or deciding whether to maintain the wireless connection between the mobile device and the AP.

Optionally, the backend server can be configured for storing and/or generating multimedia content related to one or more requests for user interaction. Furthermore, the backend server can be configured for transmitting the multimedia content related to the one or more requests for user interaction to the mobile device. Alternatively or additionally, multi-media content related to one or more requests for a user interaction can be generated and/or stored by the mobile device and/or the AP. The AP can be configured to transmit the multimedia content related to the one or more requests for user interaction to the mobile device.

For each user interaction that is requested to be performed response information indicating at least one interaction to be performed in response to the request, for instance an interaction including an input into and/or an output of the mobile device, may be stored, generated or received by at least one of the mobile device, the AP and the backend server. Optionally, the stored or generated response information can be transmitted to at least one of the mobile device, the AP and the backend server. Based on the response information and/or a detected actual user interaction that is performed in response to the request for user interaction, for instance an input into and/or an output of the mobile device, it can be decided or determined whether the requested user interaction has been performed and, consequently, whether to maintain (or "continue") the established wireless connection between the mobile device and the AP.

Optionally, it is determined that the requested user interaction is performed by the user of the mobile device when the requested user interaction is detected within a predetermined time since triggering the request for the user interaction. The predetermined time can be 1, 5, 10, 15, 30 or 60 minutes, for example. Detecting the requested user interaction can include detecting a user's input into the mobile device and/or detecting a display or output of multimedia content by means of the mobile device.

Maintaining the wireless connection between the mobile device and the AP can be an active decision that is performed by at least one of the mobile device, the AP and the backend server. When the requested user interaction has been determined or detected, the decision to maintain the connection can be made. To this end, at least one of the mobile device, the AP and the backend server may issue a control or configuration message, the control and configuration message indicating that the wireless connection between the mobile device and the AP is to be maintained, and transmit said control and configuration message to at least one of the mobile device, the AP and the backend server.

An advantage of the method for controlling wireless connectivity disclosed herein is that (e.g., repetitive) interaction of the user of the mobile device, i.e., of the user of the WLAN, can be requested and used as a condition to avoid terminating the wireless connection between the mobile device and the AP, i.e., in other words, to maintain the WLAN access of the mobile device. Contrary to known captive portals, the need for frequently terminating and subsequently reestablishing WLAN access in order to continue WLAN use is therefore expendable. In other words, since WLAN access can be continuously maintained, an effort for frequently terminating and reestablishing the wireless connection between the mobile device and the AP is rendered obsolete. It follows that ongoing data transmissions such as e.g. downloads of files having a comparatively larger size may not be interrupted, for example.

Another advantage of the disclosed method is that the requested user interaction can be provided independently from establishing the wireless connection between the mobile device and the AP. Contrary to conventional captive portals, content to be provided to the user can be received from a backend server, which is not necessarily related to the WLAN infrastructure or provider. This facilitates providing a wide variety of content to the user of the mobile device.

When it is determined that the requested user interaction is not performed by the user of the mobile device, the wireless connection between the mobile device and the AP can be terminated. Optionally, it is determined that the requested user interaction is not performed by the user of the mobile device when the requested user interaction is not detected within a predetermined time since triggering the request for the user interaction. The predetermined time can be a time of 1, 5, 10, 15, 30 or 60 minutes, for example. Detecting the requested user interaction can include detecting a user's input into the mobile device and/or detecting a display or output of multimedia content by means of the mobile device.

Optionally, terminating the wireless connection between the mobile device and the AP can be performed after a predetermined time has elapsed since triggering the request for a user interaction. For example, the wireless connection between the mobile device and the AP can be terminated after 1, 5, 10, 15, 30 or 60 minutes since triggering the request for a user interaction in case it is determined that the requested user interaction is not performed by the user of the mobile device.

An advantage of terminating the wireless connection between the mobile device and the AP in response to determining whether a requested user interaction is performed or not (i.e., using the determining as a condition to decide on maintaining or terminating WLAN connectivity) may be seen in reduced effort with respect to disconnecting and reestablishing a WLAN connection. Contrary to known WLAN controlling methods, e.g., WLAN controlling methods for public-access WLAN, the connection between the mobile device and the AP is terminated in response to an absence of a requested interaction, and not for the purpose of triggering a user interaction. While conventional methods for granting WLAN access operate a WLAN system to terminate or interrupt a wireless connection and then request a user interaction for reestablishing the WLAN access, the method disclosed herein may (e.g., merely) terminate an established wireless connection between a mobile device and an AP if a requested user interaction is omitted. However, as a user willing to maintain a granted WLAN access is likely to perform requested interactions while WLAN connectivity is ongoing, the WLAN connection between the AP and the mobile device may not be terminated until the user is unwilling to maintain the access anymore.

When it is determined that the requested user interaction is not performed by the user of the mobile device, a second (e.g., repetitive) request for a user interaction to be performed by the user of the mobile device can be triggered. Furthermore, it can be determined whether the requested second user interaction is performed by the user of the mobile device. When it is determined that the requested second user interaction is performed by the user of the mobile device, the wireless connection between the mobile device and the AP can be maintained. When it is determined that the requested second user interaction is not performed by the user of the mobile device, the wireless connection between the mobile device and the AP can be terminated.

Optionally, terminating the wireless connection between the mobile device and the AP can be conducted after a predetermined time has elapsed since triggering the second request for a user interaction. For example, the wireless connection between the mobile device and the AP can be terminated after 1, 5, 10, 15, 30 or 60 minutes since triggering the second request for a user interaction in case it is determined that the requested user interaction is not performed by the user of the mobile device.

Triggering the second request for a user interaction, determining whether the second requested user interaction is performed by the user of the mobile device and determining to maintain or to terminate the second user interaction can be performed in the same manner as described above with regard to the originally requested user interaction. It will be understood, however, that the type of user interaction requested with the second request can be different from the type of user interaction requested with the first request.

An advantage of triggering the second (e.g., repetitive) request for user interaction is that the user receives a second opportunity for maintaining the wireless connection between the mobile device and the AP in case the user is not willing or able to perform the previously requested first user interaction. In other words, the connection between the mobile device and the AP can be further maintained in case the user of the mobile device does not perform an originally requested user interaction and, in response to omitting the originally requested user interaction, a further request for a user interaction to be performed by the user of the mobile device can be triggered. In case the user omits performing both the requested first and second user interaction, the wireless connection between the mobile device and the AP can be terminated. By granting the user an additional chance for performing another user interaction, e.g., a user interaction different from the originally requested user interaction, it can be verified that the user actually intends to terminate the wireless connection and does not only refuse to perform a specific user interaction. Furthermore, granting the user a second opportunity for performing another user interaction prevents the connection between the mobile device and the AP from being unintentionally terminated in case the user has been exceptionally omitted performing a first requested user interaction.

When the wireless connection between the mobile device has been terminated, it can be determined whether the originally requested user interaction and/or the requested second user interaction is performed by the user of the mobile device. When it is determined that the requested user interaction and/or the requested second user interaction is performed by the user of the mobile device, the wireless connection between the mobile device and the AP can be reestablished.

In other words, determining whether the requested user interaction and/or the requested second user interaction is performed by the user of the mobile device can be continued after the wireless connection between the mobile device has been terminated. In case the requested user interaction and/or the requested second user interaction is performed after the wireless connection between the mobile device has been terminated, the wireless connection between the mobile device and the AP can be automatically reestablished. "Automatically reestablished" may mean that the wireless connection between the mobile device and the AP is reestablished without further input of the user of the mobile device.

Performing a previously requested user interaction after terminating the wireless connection between the mobile device and AP can be considered as the user's consent for reestablishing the previously terminated connection. Hence, automatically reestablishing the wireless connection between the mobile device and the AP in case of a delayed execution of a previously requested user interaction may reduce the number of user operations that are required for reestablishing a previously terminated connection to a minimum.

Optionally, triggering the request for a user interaction to be performed by the user of the mobile device and/or triggering the second request for a user interaction to be performed by the user of the mobile device can be performed based on at least one of:
- a predetermined time, for instance 10, 15, 30 or 60 minutes, having elapsed since establishing the wireless connection between the mobile device and the AP;
- a predetermined time, for instance 10, 15, 30 or 60 minutes, having elapsed since triggering another or previous request for a user interaction to be performed by the user of the mobile device;
- a predetermined user input received by the mobile device, for instance a user input triggering a data download having a predetermined minimal size or a user input triggering a sending of an electronic mail;
- a predetermined amount of data that has been transmitted to the AP, for instance an amount of 50, 100, 200 or 300 Megabyte data;
- a predetermined amount of data that has been received from the AP, for instance an amount of 50, 100, 200 or 300 Megabyte data;
- a change of location of the mobile device;
- a predetermined number of users having established a wireless connection to the AP; and
- a control or configuration message, the control or configuration message being issued by the mobile device, the AP or a backend server.

Event-based or periodically triggering requests for user interaction to be performed by the user of the mobile device facilitates providing a plurality of various tasks and/or contents to the user of the mobile device without terminating the connection between the mobile device and the AP.

As discussed above, maintaining the wireless connection while performing the requested user interaction for maintaining the connection renders frequent connection and disconnection procedures obsolete. Optionally, the request for user interaction can be repeated on regular basis and/or based on the occurrence of predefined events. Consequently, determining whether the requested user interaction is performed by the user of the mobile device and maintaining the connection between the mobile device and the AP can be repeated in response to such repeated requests. One advantage here is that also comparatively long-lasting or traffic-intensive WLAN access can be granted, e.g., to a public WLAN, without interrupting wireless connection between the AP and the mobile device, while various requests for user interaction can be provided to the user.

The requested user interaction can include a task to be fulfilled by the user. "A task to be fulfilled by a user" may mean a predetermined action or operation, which is to be performed by a user. Optionally, the task to be fulfilled by the user can include at least one of:
- viewing a video or an image;
- listen to an audio message;
- reading a text message; and
- responding to a request for user input.

The task to be fulfilled by the user - or, more generally, the requested user interaction - may as such not correspond to a simple question asking the user to confirm maintenance of the WLAN connectivity, such as asking the user "Click here to maintain WLAN connectivity, otherwise the connection will be terminated in 60 seconds", but may correspond to a more comprehensive task requesting a user interaction that is at least not exclusively related to simply confirming maintenance of WLAN connectivity, e.g., in response to a question explicitly directed to confirming maintenance of the WLAN connectivity. The task to be fulfilled may as such involve requesting the user to take notice of (and, optionally, acknowledging notice of) certain content, such as video/image/audio/text content to be presented to the user. As part of the user interaction, the user may also be requested to perform some action upon taking notice of the content, such as answering a question relating to the content, for example. The task may be considered fulfilled when the predetermined action or operation has actually been performed by a user, at least up to a predefined degree. For instance, if the requested user interaction includes the task of viewing a video and/or to listen to an audio message, the task can be considered fulfilled when the user views a certain percentage, for example 90%, of the video or listens to a certain percentage, for example to 80%, of the audio message. It will be understood that also a complete fulfilment of a task, e.g., viewing 100% of a video or listen to 100% of an audio message, may be required. Information about what is required to fulfill a certain task can be included the above-mentioned response information.

Determining whether the requested task is fulfilled by the user of the mobile device can be performed by at least one of the mobile device, the AP and a backend server. Determining whether the requested task is fulfilled by the user of the mobile device can include determining whether a user input into the mobile device has been received and/or whether multimedia content has been displayed or outputted by the mobile device.

If the user is tasked to view a video, determining whether the requested user interaction is performed by the user of the mobile device, i.e., determining whether the task is fulfilled can include determining how long a video is displayed by means of the mobile device. Optionally, determining whether the task is fulfilled, i.e., determining whether the video is viewed, can include detecting the user's view direction by means of a camera of the mobile device. Based on at least one of these criteria, it can be determined whether the task to view the video is fulfilled. Consequently, the decision whether to maintain the wireless connection between the mobile device and the AP can be made, as described above.

If the user is requested to listen to an audio message, on the other hand, determining whether the requested user interaction is performed by the user of the mobile device can include detecting whether a sound signal is output by means of the mobile device.

If the user is requested to read a text message, it can be determined that the task is fulfilled when the text message has been displayed by means of the mobile device for a predetermined period of time, for example.

In case responding to a request for user input is required for fulfilling a task, it can be determined that the task is fulfilled when a predetermined user input is received by means of the mobile device. For instance, when the user is requested to participate a survey, a predetermined user input that has to be received for fulfilling a task can be a selection of a predefined answer that is displayed by means of the mobile device. In another example, the task is considered fulfilled when textual information has been entered into the mobile device.

Optionally, it can be determined that the requested task is fulfilled by the user of the mobile device when the requested task is fulfilled within a predetermined time since triggering the request for the user interaction. The pretimed time can be 1, 5, 10, 15, 30 or 60 minutes, for example.

Optionally, the method can further comprise at least one of:
- triggering an optically and/or acoustically perceivable notification, for example a push message, indicating, by means of the mobile device, the request for user interaction;
- triggering an optically and/or acoustically perceivable notification, for example a push message, indicating, by means of the mobile device, a type of a user interaction which is requested to be performed; and
- triggering an optically and/or acoustically perceivable notification, for example a push message, indicating, by means of the mobile device, that the requested user interaction has been performed.

The optically and/or acoustically perceivable notifications can inform the user about a task which is required to be fulfilled for maintaining the wireless connection between the mobile device and the AP. Furthermore, the optically and/or acoustically perceivable notifications can inform the user about a successful or unsuccessful task fulfillment.

Optionally, the step of establishing the wireless connection between the mobile device and the AP can include at least one of:
- transmitting identification data from the mobile device to the AP and/or to an Authentication, Authorization and Accounting (AAA) server, the identification data identifying the mobile device;
- requesting the user of the mobile device to enter user specific credentials, for instance a name of the WLAN, a user name and/or a user password;
- activating, by the user of the mobile device, an auto-connectivity function of the mobile device, the auto-connectivity function operating the mobile device to request pre-set user-specific credentials from a backend server, the pre-set user-specific credentials optionally including at least one of a name of the WLAN, a user name and a user password;
- transmitting the user-specific credentials and/or the pre-set user-specific credentials from the mobile device to the AP and/or to the AAA server; and
- identifying, by means of the AP and/or AAA server, the mobile device based on the identification data and/or the user-specific credentials and, based on the identification, granting access to the WLAN to the mobile device.

The identification data can include a device identification number or device identification data, an electronic mail address, a telephone number or another type of unique identifier. The AAA server can be implemented together with or as a part of the AP or together with or as a part of the backend server. Alternatively, the AAA server can be implemented as a separate server, which is distinguished from the AP and/or from the backend server.

User-specific credentials, which have been entered by the user of the mobile device, can be transmitted to the backend server and stored as pre-set user-specific credentials for an auto-connectivity function. In other words, the pre-set user-specific credentials can be gathered from user-specific credentials, which have been entered by a user.

An advantage of the auto-connectivity function is that a mobile device can be automatically connected to a WLAN, for instance to an open access WLAN, when the mobile device is located within the reception range of an AP. Once the auto-connectivity function has been activated, no further user input is required for establishing and/or reestablishing a wireless connection between the mobile device and the AP. Optionally, the auto-connectivity function is configured to establish and/or reestablish a wireless connection between the mobile device and different APs and/or to establish and/or reestablish a wireless connection between the mobile device and/or at least one AP after a period of disconnection.

Optionally, the mobile device can be at least partially operated based on a set of pre-bundled functions included in a Software Development Kit (SDK) the set of pre-bundled functions including functions for at least one of:
- transmitting identification data from the mobile device to the AP and/or to an AAA server;
- receiving and/or storing user-specific credentials entered by the user;
- requesting pre-set user-specific credentials from a backend server;
- transmitting user-specific credentials and/or pre-set user-specific credentials from the mobile device to the AP and/or to an AAA server;
- receiving a control or configuration message from the AP or the backend server, the control or configuration message triggering the request for a user interaction;
- receiving a task to be fulfilled by the user or a definition of the task to be fulfilled by the user from the backend server;
- receiving multimedia content from the backend server, the multimedia content being relevant for the task to be fulfilled and including video and/or audio data; and
- receiving a request for user input from the backend server.

An advantage of using a set of pre-bundled functions included in a SDK is that they facilitate a WLAN configuration of the mobile device. Another advantage is that, by means of the SDK, the disclosed functionalities can be included into pre-existing applications for mobile devices.

By means of the AP or the backend server, a control or configuration message can be issued, wherein the control or configuration message can trigger the request for a user interaction and/or the second request for a user interaction.

Optionally, terminating the wireless connection between the mobile device and the AP can include at least one of:
- disabling, by means of the AAA server, the user-specific credentials when it is determined that the requested user interaction is not performed by the user of the mobile device; and
- terminating, by means of the AP, the wireless connection between the mobile device and the AP based on information received from the AAA server, the information indicating that the user-specific credentials have been disabled.

According to a second aspect, a computer program product is provided. the computer program product can comprise program code portions for performing one of the above-disclosed methods when the computer program product is executed by on one or more computing devices. The computer program product can be stored on a computer readable recording medium, such as a semiconductor memory, DVD, CD-ROM, and so on.

According to a third aspect, a mobile device is provided. The mobile device is configured to wirelessly communicate via an AP of a WLAN wherein the mobile device comprises at least one processor and at least one memory, wherein the at least one memory contains instructions executable by the at least one processor such that the mobile device is operable to:
- establish a wireless connection between the mobile device and the AP;
- trigger a request for a user interaction to be performed by a user of the mobile device, a user interaction being an interaction between a user of the mobile device and the mobile device;
- determine whether a requested user interaction is performed by the user of the mobile device;
- when it is determined that the requested user interaction is performed by the user of the mobile device, maintain the wireless connection between the mobile device and the AP.

It will be understood that, as one or more of the above steps can be executed by other entities, such as the AP or a backend server, as is apparent from the above description, the mobile device may also carry out only a certain subset of these steps. The at least one memory can further contain instructions executable by the at least one processor such that the mobile device is further operable to perform one or more of the above-described more detailed procedures of the first aspect that can be carried out by the mobile device.

According to a fourth aspect, an AP of a WLAN is provided. The AP is configured for providing wireless communication with a mobile device, wherein the AP comprises at least one processor and at least one memory, wherein the at least one memory contains instructions executable by the at least one processor such that the AP is operable to:
- establish a wireless connection between the mobile device and the AP;
- trigger a request for a user interaction to be performed by a user of the mobile device, a user interaction being an interaction between a user of the mobile device and the mobile device;
- determine whether a requested user interaction is performed by the user of the mobile device;
- when it is determined that the requested user interaction is performed by the user of the mobile device, maintain the wireless connection between the mobile device and the AP.

It will be understood that, as one or more of the above steps can be executed by other entities, such as the mobile device or a backend server, as is apparent from the above description, the AP may also carry out only a certain subset of these steps. The at least one memory can further contain instructions executable by the at least one processor such that the AP is further operable to perform one or more of the above-described more detailed procedures of the first aspect that can be carried out by the AP.

According to a fifth aspect, a backend server is provided. The backend server is configured to communicate with a mobile device via an Access Point, AP of a Wireless Area Local Network, WLAN, wherein the backend server comprises at least one processor and at least one memory, wherein the at least one memory contains instructions executable by the at least one processor such that the backend server is operable to:
- trigger a request for a user interaction to be performed by a user of the mobile device, a user interaction being an interaction between a user of the mobile device and the mobile device;
- determine whether a requested user interaction is performed by the user of the mobile device;
- when it is determined that the requested user interaction is performed by the user of the mobile device, maintain the wireless connection between the mobile device and the AP.

It will be understood that, as one or more of the above steps can be executed by other entities, such as the mobile device or the AP, as is apparent from the above description, the backend server may also carry out only a certain subset of these steps. The at least one memory can further contain instructions executable by the at least one processor such that the backend server is further operable to perform one or more of the above-described more detailed procedures of the first aspect that can be carried out by the backend server.

According to a sixth aspect, a system is provided. The system can include a mobile device according to the third aspect and at least one of an AP according to the fourth aspect and a backend server according to the fifth aspect.

In the following, the present disclosure will further be described with reference to exemplary implementations illustrated in the figures, in which:
Fig. 1 illustrates a schematic overview of an exemplary system according to the present disclosure;
Fig. 2 illustrates exemplary components of a mobile device;
Fig. 3 illustrates exemplary components of a WLAN AP;
Fig. 4 illustrates exemplary components of a backend server;
Fig. 5 illustrates method steps to be performed by a mobile device, a WLAN AP and/or a backend server according to the present disclosure; and
Fig. 6 illustrates another exemplary system according to the present disclosure.

In the following description, for purposes of explanation and not limitation, specific details are set forth in order to provide a thorough understanding of the present disclosure. It will be apparent to one skilled in the art that the present disclosure may be practiced in other implementations that depart from these specific details. Those skilled in the art will further appreciate that the steps, services and functions explained herein below may be implemented using individual hardware circuitry, using software functioning in conjunction with a programmed micro-processor or general purpose computer, using one or more Application Specific Integrated Circuits (ASICs) and/or using one or more Digital Signal Processors (DSPs). It will also be appreciated that, when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

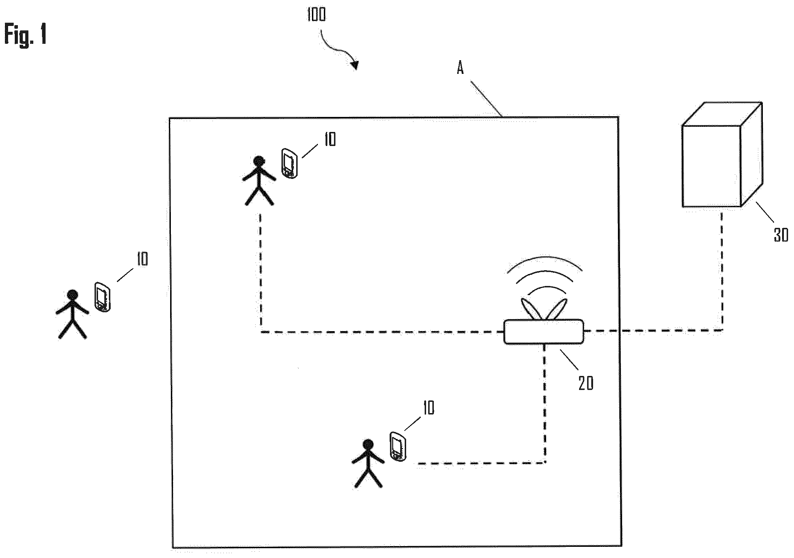

Fig. 1 illustrates a schematic overview of an exemplary system 100 including mobile devices 10, a WLAN AP 20 and a backend server 30. The mobile devices 10, which are located within the reception range A of an AP 20, may automatically establish, optionally by using an auto-connectivity function, a wireless connection to the AP 20.

Via the AP 20, the mobile devices 10 can communicate with the backend server 30. The backend server 30 may be configured to receive multimedia content and provide this content to the mobile devices 10. Further, the backend server 30 may provide tasks to be fulfilled by the users of the mobile devices for maintaining the wireless connection, for example.

The mobile devices 10, which are not located within the reception range A of an AP 20, may automatically establish a wireless connection to the AP 20 when entering the reception range. Alternatively, mobile devices 10 can be manually operated for establishing a wireless connection to the AP 20.

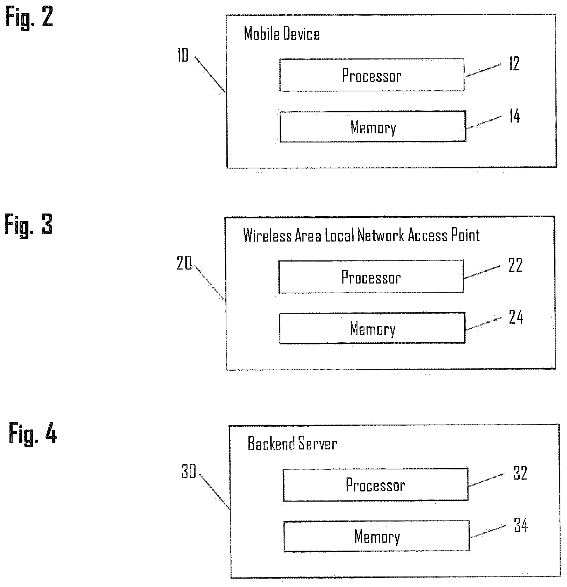

As shown in Fig. 2, a mobile device 10 includes at least a processor 12 and a memory 14. Furthermore, as shown in Fig. 3, the AP 20 includes at least a processor 22 and a memory 24. Moreover, as shown in Fig. 4, the backend server 30 likewise includes at least a processor 32 and a memory 34. It will be understood that the above implementations according to Figs. 2 to 4 are merely exemplarily.

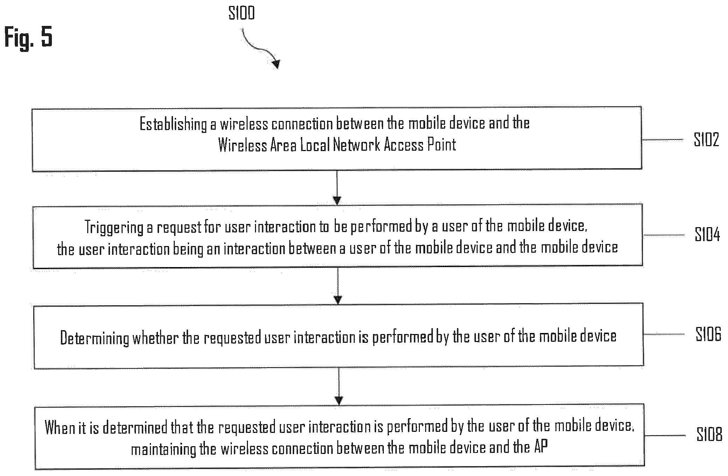

Fig. 5 illustrates a method S100 for controlling wireless connectivity between a mobile device 10 and an AP 20, wherein steps of the method S100 can be performed by means of at least one of the mobile device 10, the AP 20 and the backend server 30.

At step S102, a wireless connection between a mobile device 10 and the WLAN AP 20 is established. At step S104, a request for a user interaction to be performed by a user of the mobile device is triggered. The user interaction is an interaction between the user of the mobile device and the mobile device 10. At step S106, it is determined whether the requested user interaction is performed by the user of the mobile device. At step S108, the wireless connection between the mobile device 10 and the AP 20 is maintained when it is determined that the requested user interaction is performed by the user of the mobile device.

If the requested user interaction is not performed within a predetermined time since triggering the request for user interaction, the wireless connection between the mobile device 10 and the AP 20 is terminated.

It will be understood that the steps of method S100 can be carried out in line with the above more general description of the technique presented herein. As such, it is possible to perform the different steps S102, S104, S106, S108 of the method S100 by means of different devices, i.e., by means of the mobile device 10, the AP 20 and/or the backend server 30.

For example, the mobile device 10 may initiate establishing the wireless connection between a mobile device 10 and the AP 20 and may determine whether the requested user interaction is performed by the user of the mobile device, wherein the request for a user interaction is triggered by means of the backend server 30. In another example, the request for a user interaction can be triggered by means of the AP 20 or the mobile device 10. It is apparent to one skilled in the art that the different steps of the method 5100 are not bound to a specific device or component of the system 100 and that the method can be realized by means of different components performing the different steps.

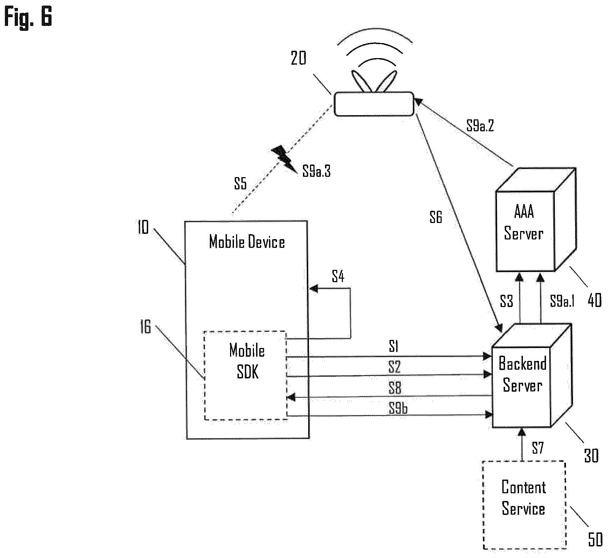

Another exemplary - and more specific - system according to the present disclosure is shown in Fig. 6. With reference to Fig. 6, further details of the technique presented herein will be given in relation to a particular use case. It will be understood that, while some details will only be described in relation to this particular use case, these details shall not be limited to thus specific use case and may likewise be employed in combination with the above-described in more general description of the method presented herein.

Fig. 6 shows the mobile device 10, which is configured for automatically establishing a wireless connection to the AP 20 when entering the reception range of the AP 20. To this end, an auto-connectivity function of the mobile device 10, which is operated based on a set of pre-bundled functions included in an SDK can be activated by a user of the mobile device.

Furthermore, Fig. 6 shows the WLAN AP 20, which is configured to grant WLAN access to the mobile device 10 based on a positive authentication of the mobile device. For this, an AAA server 40 is provided. The AAA server 40 is configured to store device identification information as well as user-specific credentials. Furthermore, the AAA server 40 is registered within the AP 20 so that the AP 20 is capable of granting or denying access to the WLAN based on the information and credentials stored by the AAA server.

Moreover, Fig. 6 shows the backend server 30 that is configured to receive multimedia content from a content service 50 and provide this content to the mobile device 10. Additionally, the backend server 30 is configured to provide tasks to be fulfilled by the mobile device's user for maintaining the wireless connection.

If a task is requested to be fulfilled, the backend server 30 sends a control or configuration message to the mobile device 10. The user is informed about the requested task by means of a push mechanism and/or functions included in the SDK. Further, the backend server 30 is configured to communicate with the mobile device 10 via the pre-bundled functions included in the SDK to determine whether a requested task has been fulfilled by the user.

An example for a method for controlling wireless connectivity between the mobile device 10 and the AP 20 shown in Fig. 6 comprises the following steps:
S1: The user initializes the mobile device 10. To this end, device identification information such as an electronic mail address, a mobile number or further identification information that unambiguously identifies the mobile device 10 are entered by the user of the mobile device 10 and stored at the backend server 30. Additionally, user-specific credentials such as a name of the WLAN, a user name and/or a user password are entered by the user of the mobile device 10 and stored at the backend server 30. These user-specific credentials represent the pre-set user-specific credentials.
S2: The user activates an auto-connectivity function. The auto-connectivity function operates the mobile device to request the stored device identification information and the stored pre-set user-specific credentials from the backend server.
S3: The device identification information and the pre-set user-specific credentials are transmitted to the AAA server 40. This allows the AP 20, which is connected to the AAA server 40, to determine whether the mobile device 10 is authorized to use the WLAN.
S4: The WLAN configuration of the mobile device 10 is set by functions included in the SDK, based on the pre-set user-specific credentials. Optionally, the mobile operating system may send a request for confirming the setting of the WLAN configuration to the user.
S5: A wireless connection between the mobile device 10 and the AP 20 is established when the mobile device 10 is within the reception range of the AP 20. The AP 20 grants access to mobile device based on the information and credentials stored by the AAA server.
S6: When the wireless connection between the mobile device 10 and the AP 20 has been established, the backend server 30 is informed about the connection and determines when to trigger a request for a user interaction to be performed for maintaining the wireless connection.
S7: When the backend server 30 determines that a task is to be fulfilled to maintain the wireless connection between the mobile device 10 and the AP 20, the backend server 30 retrieves task details from the content service 50.
S8: The backend server 30 transmits information about the task to be fulfilled to the mobile device 10. Optionally, the backend server 30 further transmits information about multimedia content, which is relevant for fulfilling the task, to the mobile device 10. By means of functions included in the SDK, the user of the mobile device is informed about the task to be fulfilled, for example by means of a push notification that is displayed by the mobile device.
   In an example, the user can be requested to view a video for maintaining the wireless connection between the mobile device 10 and the AP 20, wherein the video is provided to the mobile device 10 via the backend server 30.
   In another example, the user can be requested to answer a question or to participate a survey wherein the question or the survey is provided to the mobile device 10 via the backend server 30.
9a.1: In case the user of the mobile device does not fulfill the requested task within a predefined period of time, the wireless connection between the mobile device 10 and the AP 20 is terminated.
9a.2: To this end, the user credentials stored by AAA server 40 are disabled based on a configuration or control message issued by the backend server 30, which has determined that the user of the mobile device did not fulfill the requested task within the predefined period of time.
9a.3: Subsequently, the AP 20 terminates the wireless connection with the mobile device 10.
9b: Alternatively, when the backend server 30 determines that the task has been fulfilled, the wireless connection between the mobile device 10 and the AP 20 is maintained.

In case the wireless connection between the mobile device 10 and the AP 20 has been terminated because the backend server 30 had determined that the task had not been fulfilled, the wireless connection between the mobile device 10 and the AP 20 can be reestablished when the user fulfills the task after the connection has been terminated.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A method (S100) for controlling wireless connectivity between a mobile device (10) and an Access Point, AP, (20) of a Wireless Area Local Network, WLAN, the method comprising:
establishing (S102) a wireless connection between the mobile device and the AP;
triggering (S104) a request for a user interaction to be performed by a user of the mobile device, the user interaction being an interaction between a user of the mobile device and the mobile device;
determining (S106) whether the requested user interaction is performed by the user of the mobile device; and
when it is determined that the requested user interaction is performed by the user of the mobile device, maintaining (S108) the wireless connection between the mobile device and the AP.

2. The method according to claim 1, further comprising:
when it is determined that the requested user interaction is not performed by the user of the mobile device, terminating the wireless connection between the mobile device and the AP.

3. The method according to claim 2, wherein
the wireless connection between the mobile device and the AP is terminated after a predetermined time has elapsed since triggering the request for a user interaction.

4. The method according to claim 1, further comprising:
when it is determined that the requested user interaction is not performed by the user of the mobile device, triggering a second request for a user interaction to be performed by the user of the mobile device; and
determining whether the requested second user interaction is performed by the user of the mobile device;
the method further comprising at least one of:
when it is determined that the requested second user interaction is performed by the user of the mobile device, maintaining the wireless connection between the mobile device and the AP; and
when it is determined that the requested second user interaction is not performed by the user of the mobile device, terminating the wireless connection between the mobile device and the AP.

5. The method according to claim 4, wherein
the wireless connection between the mobile device and the AP is terminated after a predetermined time has elapsed since triggering the second request for a user interaction.

6. The method according to any of claims 2 to 5, wherein
when the wireless connection between the mobile device has been terminated, determining whether the requested user interaction and/or the requested second user interaction is performed by the user of the mobile device, and
when it is determined that the requested user interaction and/or the requested second user interaction is performed by the user of the mobile device, reestablishing the wireless connection between the mobile device and the AP.

7. The method according to any one of claims 1 to 6, wherein
triggering the request for a user interaction to be performed by the user of the mobile device is performed based on at least one of:
a predetermined time having elapsed since establishing the wireless connection between the mobile device and the AP;
a predetermined time having elapsed since triggering another request for a user interaction to be performed by the user of the mobile device;
a predetermined user input received by the mobile device;
a predetermined amount of data that has been transmitted to the AP;
a predetermined amount of data that has been received from the AP;
a change of location of the mobile device;
a predetermined number of users having established a wireless connection to the AP; and
a control or configuration message, the control or configuration message being issued by the mobile device, the AP or a backend server (30).

8. The method according to any one of claims 1 to 7, wherein
the requested user interaction includes a task to be fulfilled by the user, the task to be fulfilled by the user optionally including at least one of:
viewing a video or an image;
listen to an audio message;
reading a text message; and
responding to a request for user input.

9. The method according to any one of claims 1 to 8, wherein
establishing the wireless connection between the mobile device and the AP includes at least one of:
transmitting identification data from the mobile device to the AP and/or to an Authentication, Authorization and Accounting, AAA, server, the identification data identifying the mobile device;
requesting the user of the mobile device to enter user specific credentials;
activating, by the user of the mobile device, an auto-connectivity function of the mobile device, the auto-connectivity function operating the mobile device to request pre-set user-specific credentials from a backend server, the pre-set user-specific credentials optionally including at least one of a name of the WLAN, a user name and a user password;
transmitting the user-specific credentials and/or the pre-set user-specific credentials from the mobile device to the AP and/or to the AAA server; and
identifying, by means of the AP and/or AAA server, the mobile device based on the identification data and/or the user-specific credentials and, based on the identification, granting access to the WLAN to the mobile device.

10. The method according to any one of claims 1 to 9, wherein
the mobile device is at least partially operated based on a set of pre-bundled functions included in a Software Development Kit, SDK, (16) the set of pre-bundled functions including functions for at least one of:
transmitting identification data from the mobile device to the AP and/or to an AAA server;
receiving and/or storing user-specific credentials entered by the user;
requesting pre-set user-specific credentials from a backend server;
transmitting user-specific credentials and/or pre-set user-specific credentials from the mobile device to the AP and/or to an AAA server;
receiving a control or configuration message from the AP or the backend server, the control or configuration message triggering the request for a user interaction;
receiving a definition of a task to be fulfilled by the user from the backend server;
receiving multimedia content from the backend server, the multimedia content being relevant for the task to be fulfilled and including video and/or audio data; and
receiving a request for user input from the backend server.

11. The method according to any one of claims 1 to 10, further comprising
issuing, by means of the AP or a backend server, a control or configuration message, the control or configuration message triggering the request for a user interaction.

12. The method according to any one of claims 2 to 11, wherein
terminating the wireless connection between the mobile device and the AP includes at least one of:
disabling, by means of an AAA server, the user-specific credentials when it is determined that the requested user interaction is not performed by the user of the mobile device; and
terminating, by means of the AP, the wireless connection between the mobile device and the AP based on information received from the AAA server, the information indicating that the user-specific credentials have been disabled.

13. A computer program product comprising program code portions for performing the method of any one of claims 1 to 12 when the computer program product is executed by on one or more computing devices.

14. The computer program product of claim 13, stored on a computer readable recording medium.

15. A mobile device (10) configured to wirelessly communicate via an Access Point, AP (20), of a Wireless Area Local Network, WLAN, the mobile device comprising at least one processor (12) and at least one memory (14), the at least one memory containing instructions executable by the at least one processor such that the mobile device is operable to:
establish (S102) a wireless connection between the mobile device and the AP;
trigger (S104) a request for a user interaction to be performed by a user of the mobile device, a user interaction being an interaction between a user of the mobile device and the mobile device;
determine (S106) whether a requested user interaction is performed by the user of the mobile device; and
when it is determined that the requested user interaction is performed by the user of the mobile device, maintain (S108) the wireless connection between the mobile device and the AP.

16. The mobile device according to claim 15, the at least one memory further containing instructions executable by the at least one processor such that the mobile device is further operable to perform a method according to any of claims 2 to 8 and 10.

17. An Access Point, AP, (20) of a Wireless Area Local Network, WLAN, for providing wireless communication with a mobile device (10), the AP comprising at least one processor (22) and at least one memory (24), the at least one memory containing instructions executable by the at least one processor such that the AP is operable to:
establish (S102) a wireless connection between the mobile device and the AP;
trigger (S104) a request for a user interaction to be performed by a user of the mobile device, a user interaction being an interaction between a user of the mobile device and the mobile device;
determine (S106) whether a requested user interaction is performed by the user of the mobile device; and
when it is determined that the requested user interaction is performed by the user of the mobile device, maintain (S108) the wireless connection between the mobile device and the AP.

18. A backend server (30) configured to communicate with a mobile device (10) via an Access Point (20), AP of a Wireless Area Local Network, WLAN, the backend server comprising at least one processor (32) and at least one memory (34), the at least one memory containing instructions executable by the at least one processor such that the backend server is operable to:
trigger (S104) a request for a user interaction to be performed by a user of the mobile device, a user interaction being an interaction between a user of the mobile device and the mobile device;
determine (S106) whether a requested user interaction is performed by the user of the mobile device; and
when it is determined that the requested user interaction is performed by the user of the mobile device, maintain (S108) the wireless connection between the mobile device and the AP.

19. A system (100) comprising a mobile device (10) according to claim 15 or claim 16 and at least one of an Access Point, AP, (20) according to claim 17 and a backend server (30) according to claim 18.
